# EUROPÄISCHE PATENTANMELDUNG

(11) **EP 1 401 070 A2**
(43) Veröffentlichungstag der Anmeldung: **24.03.2004**
(21) Anmeldenummer: 03020213.9
(22) Anmeldetag: 05.09.2003
(51) Int. Cl.: H02B 1/052

(54) **Einrichtung zur Befestigung eines Installationsgerätes auf einer Tragschiene**

(30) Priorität: 18.09.2002 DE 10243383
(71) Anmelder: SIEMENS AKTIENGESELLSCHAFT, 80333 München (DE)
(72) Erfinder: Hermann, Johann, 84066 Mallersdorf-Pfaffenberg (DE)

(57) **Zusammenfassung**

Eine Einrichtung zur Befestigung eines Installationsgerätes (1) auf einer Tragschiene (35) weist einen senkrecht zum Verlauf der Tragschiene (35) verschieblichen, mittels Federkraft in Richtung der Tragschiene (35) gedrückten und in seiner Befestigungsstellung einen Schenkel der Tragschiene (35) mit einer Rastnase(6) untergreifenden Schieber (3) auf, welcher an einer in einer Befestigungsebene (E) liegenden Befestigungsseite (4) des Gehäuses (2) angeordnet ist, welche einer Betätigungsseite (8) des Gehäuses (2) gegenüberliegt, wobei zwischen der Betätigungsseite (8) und der Befestigungsseite (4) zwei Gehäuseseitenflächen (10,11) angeordnet sind, deren Flächennormalen parallel zur Tragschiene (35) verlaufen und wobei senkrecht zu den Gehäuseseitenflächen (10,11) zwei Klemmenflächen (12,13) des Gehäuses (2) angeordnet sind. Erfindungsgemäß ist ein zumindest geringfügig relativ zum Gehäuse (2) beweglicher gehäusefremder Haltearm (15) zur Fixierung des Schiebers (3) am Gehäuse (2) vorgesehen.

## Beschreibung

Die Erfindung betrifft eine Einrichtung zur Befestigung eines Installationsgerätes auf einer Tragschiene nach dem Oberbegriff des Anspruchs 1. Eine derartige Einrichtung ist beispielsweise aus der DE 35 13 762 C2 bekannt.

Installationsgeräte, beispielsweise elektrische Schaltgeräte, sind häufig an einer auch als Hutschiene bezeichneten Tragschiene befestigt. Hierbei weist das Gehäuse des Installationsgerätes eine auf die Tragschiene aufschnappbare Rastvorrichtung auf, wobei ein Schieber auf der der Tragschiene zugewandten Seite des Gehäuses eine Rastnase aufweist, welche durch Federkraft in Richtung der Tragschiene gedrückt wird und deren Rand oder Schenkel untergreift. Zum Abnehmen des Installationsgerätes von der Tragschiene wird üblicherweise ein Werkzeug, beispielsweise ein Schraubendreher verwendet, um die Rastverbindung zwischen der Rastnase des Schiebers und dem Schenkel der Tragschiene gegen die Federkraft zu lösen.

Der Erfindung liegt die Aufgabe zugrunde, eine Einrichtung zur Befestigung eines Installationsgerätes auf einer Tragschiene anzugeben, welche ein besonders einfaches Abnehmen des Installationsgerätes von der Tragschiene ermöglicht.

Diese Aufgabe wird erfindungsgemäß gelöst durch eine Einrichtung zur Befestigung eines Installationsgerätes auf einer Tragschiene mit den Merkmalen des Anspruchs 1. Hierbei weist das Installationsgerät an einer Befestigungsseite dessen Gehäuses einen in einer Befestigungsebene senkrecht zum Verlauf der Tragschiene verschieblichen, mittels Federkraft in Richtung der Tragschiene gedrückten und in seiner Befestigungsstellung einen Schenkel der Tragschiene mit einer Rastnase untergreifenden Schieber auf. Der Schieber ist hierbei bevorzugt in Führungsbahnen des Gehäuses des Installationsgerätes geführt und weist vorzugsweise eine rahmenartige Grundgestalt auf. Innerhalb des durch den Schieber gebildeten Rahmens ist in raumsparender Weise vorzugsweise ein die Rastnase an die Tragschiene drückendes Federelement, bevorzugt als integrales Teil des Schiebers, angeordnet. Das Gehäuse des Installationsgerätes weist der Befestigungsseite gegenüberliegend eine Betätigungsseite auf, sowie zwischen Befestigungsebene und Betätigungsseite je zwei Gehäuseseitenflächen sowie zwei Klemmenflächen, wobei die Gehäuseseitenflächen normal zur Tragschiene und die Klemmenflächen senkrecht zu den Gehäuseseitenflächen angeordnet sind. Die Gehäuseseiten- und Klemmenflächen werden zusammenfassend als Wandflächen bezeichnet. Zur Fixierung des Schiebers am Gehäuse in Befestigungsstellung ist ein zumindest geringfügig relativ zum Gehäuse, sowie vorzugsweise auch zumindest in einem Teilbereich relativ zum Schieber, beweglicher gehäusefremder Haltearm vorgesehen.

Die Trennung des Haltearms vom Gehäuse ermöglicht es, die Rastnase des Schiebers vom Schenkel der Tragschiene abzuheben, ohne hierbei gegen die die Rastnase an die Tragschiene drückende Federkraft zu arbeiten. Beim Lösen der Fixierung zwischen Schieber und Gehäuse wird eine Entspannung des die Federkraft zwischen der Rastnase und der Tragschiene bewirkenden Federelementes ermöglicht. Im Gegensatz hierzu ist es bei einem beispielsweise aus der DE 35 13 762 C2 bekannten Installationsgerät erforderlich, beim Abnehmen dieses Gerätes von der Tragschiene den Schieber einschließlich der Rastnase gegen die Federkraft eines die Rastnase an die Tragschiene drückenden Federelementes aus der Befestigungsstellung zu entfernen. Dies bedeutet, dass bei diesem Installationsgerät nach dem Stand der Technik bei an der Tragschiene eingerasteter Rastnase lediglich ein Teil der maximalen Federkraft des Federelementes ausgenutzt wird. Eine höhere, jedoch nicht nutzbare Federkraft tritt beim Abnehmen des Installationsgerätes von der Tragschiene auf. Diese höhere Kraft muss durch ein Werkzeug, wie beispielsweise einen Schraubendreher, auf den Schieber übertragen werden.

Die erfindungsgemäße Ausbildung der Einrichtung zur Befestigung des Installationsgerätes auf der Tragschiene mit vom Gehäuse getrennten Haltearm zur Fixierung des Schiebers ermöglicht es dagegen, das die Rastnase des Schiebers gegen die Tragschiene drückende Federelement derart auszubilden, dass die maximale Federkraft nicht beim Aufsetzen oder Abnehmen des Installationsgerätes auf die Tragschiene sondern in Befestigungsstellung auftritt. Es ist daher ein eine hohe Federkraft ausübendes Federelement verwendbar, auch mit einem sehr geringen oder infinitesimalen Federweg. Es ist ein Federweg ausreichend, mit dem Abmessungstoleranzen der Tragschiene und des Installationsgerätes ausgeglichen werden können. Dagegen ist es nicht erforderlich, den Federweg entsprechend dem Weg zu dimensionieren, um den die Rastnase beim Entfernen des Installationsgerätes von der Tragschiene von deren Rand abgehoben werden muss. Trotz der hohen Federkraft, die die Rastnase an die Tragschiene drückt und damit eine sehr stabile Lagerung des Installationsgerätes auf der Tragschiene sicherstellt, ist die Halterung des Installationsgerätes auf der Tragschiene manuell lösbar.

Nach einer ersten Alternative stützt sich der Schieber oder ein Teil des Schiebers, insbesondere ein die Rastnase gegen die Tragschiene drückendes Federelement, gegen einen stiftförmigen Haltearm ab, welcher senkrecht zur Befestigungsebene das gesamte Gehäuse des Installationsgerätes durchdringt und auf der Betätigungsseite des Gehäuses betätigbar ist. Der stiftförmige Haltearm ist vorzugsweise unverlierbar im Gehäuse gelagert. Dadurch, dass ein Ende des stiftförmigen Haltearms auf der Betätigungsseite des Gehäuses aus diesem heraustritt, ist anhand der Stellung des Haltearmes leicht ersichtlich, ob das Installationsgerät auf der Tragschiene eingerastet ist.

Nach einer zweiten Alternative ist der Haltearm schwenkbar am Gehäuse, entweder an dessen Außenseite oder im Gehäuseinneren, gelagert. Die Bedienung des Haltearms erfolgt hierbei vorzugsweise an einer Klemmenfläche des Gehäuses, d.h. an einer zwischen den Gehäuseseitenflächen angeordneten Seite des Gehäuses. Auch in diesem Fall ist anhand der Stellung des Haltearms leicht die korrekte Fixierung des Installationsgerätes auf der Tragschiene erkennbar.

Nach einer weiteren, besonders bevorzugten Ausgestaltung ist der Haltearm einstückig mit dem Schieber ausgebildet, wobei der Haltearm vorzugsweise elastisch ist und damit geeignet ist, die Rastnase des Schiebers ohne weiteres Federelement an die Tragschiene zu drücken. Ebenso kann der Schieber zusammen mit dem Haltearm beziehungsweise den Haltearmen, zusammenfassend als Schlitten bezeichnet, insgesamt zumindest geringfügige elastische Eigenschaften aufweisen.

Der Haltearm liegt vorzugsweise in Platz sparender Weise an einer Gehäuseseitenfläche an, wobei eine besonders gute Raumausnutzung durch eine zur Aufnahme des Haltearms vorgesehene Gehäusevertiefung an der Gehäuseseitenfläche erreichbar ist. Die Form des Haltearms ist vorzugsweise abgewinkelt, wobei ein erster, an den Schieber anschließender Schenkel des Haltearms etwa senkrecht auf der Befestigungsebene und auf dem Schieber steht und ein zweiter, an den ersten Schenkel anschließender Schenkel etwa parallel zur Befestigungsebene verläuft. Durch die abgewinkelte Form des Haltearms sind auf besonders einfache Weise elastische Eigenschaften realisierbar, durch welche die Rastnase an die Tragschiene gedrückt wird.

Der insbesondere abgewinkelt ausgebildete Rastarm ist vorzugsweise in eine an einer Wandfläche, insbesondere an einer Klemmenfläche oder an einer Kante zwischen Klemmen- und Gehäuseseitenfläche, des Gehäuses angeordnete Rastvorrichtung einrastbar. Der Haltearm ist damit leicht aus der Rastvorrichtung manuell lösbar. Alternativ ist zum Lösen des Haltearms von der Rastvorrichtung und damit zum Aufheben der Fixierung der Rastnase des Schiebers an der Tragschiene auch ein Werkzeug, wie beispielsweise ein gebräuchlicher Schraubendreher verwendbar.

Um eine besonders stabile Halterung des Schiebers in Befestigungsstellung zu gewährleisten, ist vorzugsweise die Anordnung jeweils eines Haltearmes an jeder Gehäuseseitenfläche vorgesehen. Um die Stabilität weiter zu erhöhen sowie die manuelle Bedienung zu erleichtern, sind die Enden der Haltearme vorzugsweise durch einen zumindest geringfügig beweglichen Haltebügel verbunden. Der Haltebügel ist bevorzugt auf der Klemmenseite des Gehäuses angeordnet, wobei der Haltebügel vorzugsweise derart von der Befestigungsebene beabstandet ist, dass zwischen dieser und dem Haltebügel ein Raum für eine Anschlussöffnung im Gehäuse vorgesehen ist. Dieser Raum ist beispielsweise zur Befestigung einer Sammelschiene nutzbar.

Der Vorteil der Erfindung liegt insbesondere darin, dass durch die einstückige Ausbildung eines zur Fixierung eines Installationsgerätes auf einer Tragschiene vorgesehenen Schiebers mit einem zumindest geringfügig elastisch ausgebildeten, mit einer Rastvorrichtung an einer Klemmenfläche des Gehäuses korrespondierenden Haltearm eine besonders rationell herstellbare, einfach manuell bedienbare und mechanisch belastbare Hutschienenbefestigung gegeben ist.

Ein Ausführungsbeispiel der Erfindung wird nachfolgend anhand einer Zeichnung näher erläutert. Hierin zeigen:
- FIG 1a, 1b,1c: in schematischer Darstellung eine Einrichtung zur Befestigung eines Installationsgerätes auf einer Tragschiene,
- FIG 2a,2b: in perspektivischer Darstellung ein Installationsgerät zur Tragschienenmontage,
- FIG 3a,3b: jeweils einen Schlitten für ein Installationsgerät zur Tragschienenmontage,
- FIG 4a,4b,4c: in schematischer Seitenansicht das Installationsgerät nach FIG 2a,2b,
- FIG 5a,5b: in perspektivischer Ansicht ein Installationsgerät zur Tragschienenmontage,
- FIG 6a,6b: in schematischer Seitenansicht ein Installationsgerät zur Tragschienenmontage, und
- FIG 7a,7b: in perspektivischer Darstellung das Installationsgerät nach FIG 6a,6b.

Einander entsprechende Teile sind in allen Figuren mit den gleichen Bezugszeichen versehen.

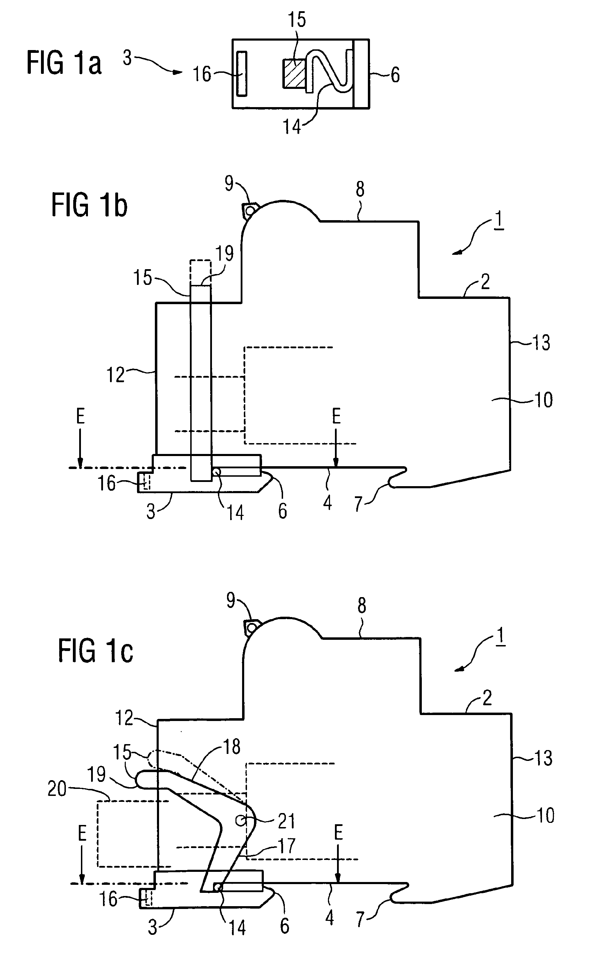

Die FIG 1a,1b,1c zeigen schematisch in einer gesamten Seitenansicht (FIG 1b,1c) beziehungsweise in einem Detail in Draufsicht (FIG 1a) ein elektrisches Installationsgerät 1, welches mittels eines an dessen Gehäuse 2 geführten Schiebers 3 auf eine hier nicht dargestellte Tragschiene oder Hutschiene montierbar ist. Der Schieber 3 ist in einer Befestigungsebene E auf einer Befestigungsseite 4 des Gehäuses 2 des Installationsgerätes 1 senkrecht zur Tragschiene verschiebbar gelagert. Eine Rastnase 6 des Schiebers 3 sowie eine auf der Befestigungsseite 4 feststehend angeordnete Haltenase 7 umgreifen jeweils einen Rand der Tragschiene.

Die der Befestigungsseite 4 gegenüberliegende Seite des Gehäuses 2 wird als Betätigungsseite 8 bezeichnet. In den dargestellten Ausführungsbeispielen befindet sich auf der Betätigungsseite 8 ein Betätigungsknebel 9. Die Bezeichnung Betätigunggsseite implementiert jedoch nicht notwendigerweise die Existenz eines Betätigungsknebels. Zwischen der Befestigungsseite 4 und der Betätigungsseite 8 des Gehäuses 2 befinden sich zwei normal zur Tragschiene angeordnete Gehäuseseitenflächen 10,11 (in FIG 1b, 1c ist jeweils die Gehäuseseitenfläche 10 sichtbar) sowie senkrecht zu den Gehäuseseitenflächen 10,11 zwei Klemmenflächen 12,13, an welchen elektrische Leitungen anschließbar sind.

Der Schieber 3 weist eine an die Rastnase 6 anschließende Feder 14 auf, welche sich an einen im oder am Gehäuse gelagerten Haltearm 15 abstützt. Im Ausführungsbeispiel nach FIG 1b ist der Haltearm 15 stiftförmig, das Gehäuse 2 von der Befestigungsseite 4 bis zur Betätigungsseite 8 durchdringend ausgebildet. Der Haltearm 15 ist in diesem Fall im Inneren des Gehäuses 2 gelagert. In der mit durchgezogenen Linien dargestellten Position ist durch den Haltearm 15 die Feder 14 fixiert und damit das Installationsgerät 1 auf der nicht dargestellten Hutschiene eingerastet. In der gestrichelt dargestellten Position des Haltearms 15 ist die Feder 14 und damit der Schieber 3 insgesamt freigegeben. Der Schieber 3 ist in diesem Fall auf einfache Weise relativ zum Gehäuse 2 verschiebbar, indem das Installationsgerät 1 insgesamt quer zur Tragschiene verschoben wird, wobei die Rastnase 6 des Schiebers 3 am Rand der Tragschiene anliegt. Alternativ kann auch ein Werkzeug, beispielsweise ein Schraubendreher, an einem Betätigungsschlitz 16 des Schiebers 3 angesetzt werden, um diesen auf der Befestigungsseite 4 zu verschieben. Um eine leichtere Betätigbarkeit des Haltearms 15 zu erreichen, kann dieser in dessen mit der Feder 14 zusammenwirkendem Bereich abgeschrägt sein. Hierbei wird die Feder 14 durch das Eindrücken des Haltearms 15 in das Gehäuse 2 komprimiert.

FIG 1c zeigt eine alternative Ausbildung des Haltearms 15, welcher in diesem Fall an der Gehäuseseitenfläche 10 schwenkbar gelagert ist und einen ersten Schenkel 17 sowie einen etwa rechtwinklig zu diesem angeordneten zweiten Schenkel 18 aufweist. Die Betätigung des Haltearms 15 erfolgt in diesem Fall an der Klemmenfläche 12. Hierbei ist zwischen einem Betätigungsende 19 des Haltearms 15 und der Betätigungsebene E ein ausreichender Raum für die Installation einer gestrichelt eingezeichneten Stromschiene 20 vorhanden. Gleichzeitig ist selbst bei installierter Stromschiene 20 eine manuelle Betätigung des Haltearms 15 möglich. Die den Schieber 3 an der Tragschiene fixierende sowie die den Schieber 3 freigebende Position des Haltearms 15 sind durch die mit durchgezogenen bzw. gestrichelten Linien dargestellten Positionen des Haltearmes 15 gekennzeichnet. Hierbei ist der übersichtlichen Darstellung halber lediglich der zweite, von einem Drehpunkt 21 bis zum Betätigungsende 19 reichende Schenkel 18 in beiden Positionen dargestellt. Die längere Ausbildung des zweiten Schenkels 18 im Vergleich zum ersten Schenkel 17 ermöglicht es, auch bei manueller Betätigung eine hohe Kraft auf die Feder 14 auszuüben. Der schwenkbar gelagerte Haltearm 15 hebt in der Freigabeposition vollständig von der Feder 14 ab, so dass der Schieber 3 frei verschiebbar ist.

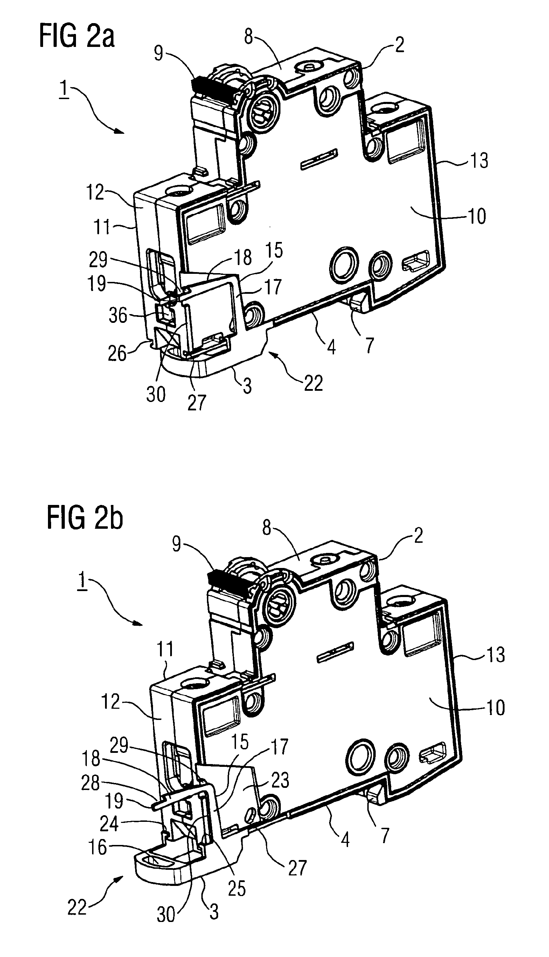

In den FIG 2a,2b, 3a,3b, 4a,4b,4c, 5a,5b, 6a,6b sind Ausführungsformen einer Einrichtung zur Befestigung eines Installationsgerätes 1 auf einer Tragschiene dargestellt, bei welchen der Schieber 3 zusammen mit mindestens einem Haltearm 15 als einstückiger Schlitten 22 ausgebildet ist. Der Schlitten 22 mit dem Haltearm 15 bzw. den Haltearmen 15 ist als Kunststoffspritzgussteil hergestellt.

Die FIG 2a,2b zeigen ein Installationsgerät 1 mit einem Schlitten 22, welcher lediglich einen einzigen Haltearm 15 aufweist. Dieser Haltearm 15 hat eine abgewinkelte Form mit einem senkrecht auf dem Schieber 3 stehenden ersten Schenkel 17 und einem rechtwinklig an diesen anschließenden, parallel zum Schieber 3 angeordneten zweiten Schenkel 18. Zur Aufnahme des Haltearms 15 ist eine Gehäusevertiefung 23 auf der Gehäuseseitenfläche 10 vorgesehen. Der Schieber 3 weist parallel zur Befestigungsebene E sowie zu den Gehäuseseitenflächen 10,11 verlaufende Stege 24,25 auf, welche in Führungsbahnen 26,27 an den Gehäuseseitenflächen 11,10 geführt sind und somit die Verschiebung des Schiebers 3 senkrecht zur Tragschiene ermöglichen.

Der Haltearm 15 des Schlittens 22 weist eine zumindest geringfügige Elastizität auf, welche ein permanentes Andrücken der Rastnase 6 an die Tragschiene in Befestigungsstellung sicherstellt. An dessen Betätigungsende 19 weist der Haltearm 15 eine Ausnehmung 28 auf, welche mit einem Rastvorsprung 29 an der Klemmenfläche 12 korrespondiert. Um den Schlitten 22 von der in FIG 2a dargestellten Fixierposition, in welcher das Installationsgerät 1 fest auf der Tragschiene gehalten ist, in die in FIG 2b dargestellte Freigabeposition verschieben zu können, wird das Betätigungsende 19 des Haltearms 15 auf der Klemmenfläche 12 geringfügig per Hand oder mit Hilfe eines Werkzeugs in Richtung zur Befestigungsebene E gedrückt. Die Verbindung zwischen der Ausnehmung 28 des Haltearms 15 und dem Rastvorsprung 29 des Gehäuses 5 ist somit gelöst und der Schlitten 22 verschiebbar. Ein unbeabsichtigtes Abnehmen des Schlittens 22 vom Gehäuse 2 ist durch einen Gehäusesteg 30 verhindert, der an der Klemmenfläche 12 mit dem ersten Schenkel 17 des Haltearms 15 zusammenwirkt.

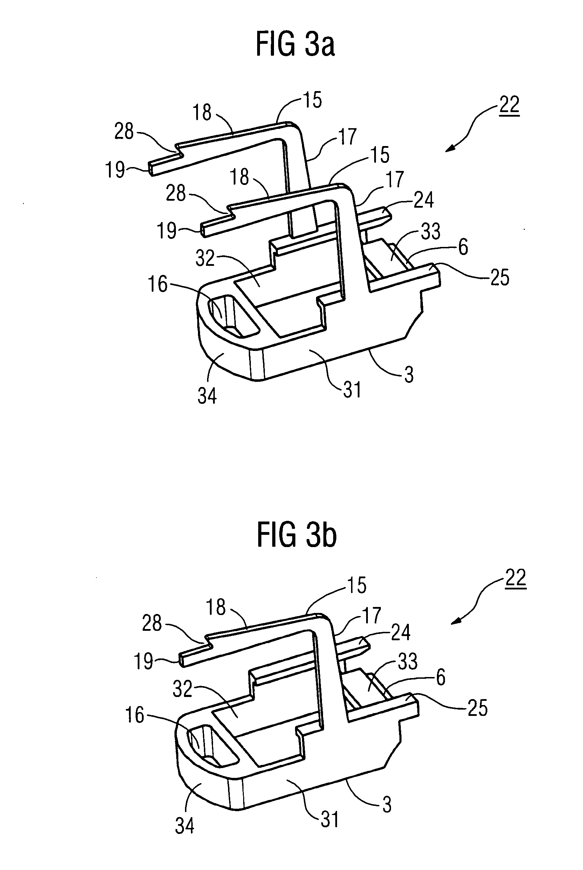

Die FIG 3a,3b zeigen einen Schlitten 22 mit zwei bzw. einem Haltearm 15. Letztgenannte Ausbildung entspricht der Darstellung nach FIG 2a,2b. Die Funktion beider Haltearme 15 ist identisch. Aus den FIG 3a,3b ist die rahmenförmige Grundform des Schiebers 3 gut ersichtlich. Die Rahmenform wird gebildet aus jeweils einem Schieberseitenteil 31,32, welches jeweils etwa in der Ebene der Gehäuseseitenflächen 10,11 angeordnet ist und einem inneren Schiebersteg 33, welcher die Rastnase 6 trägt sowie einem äußeren Schiebersteg 34, welcher den Betätigungsschlitz 16 aufweist.

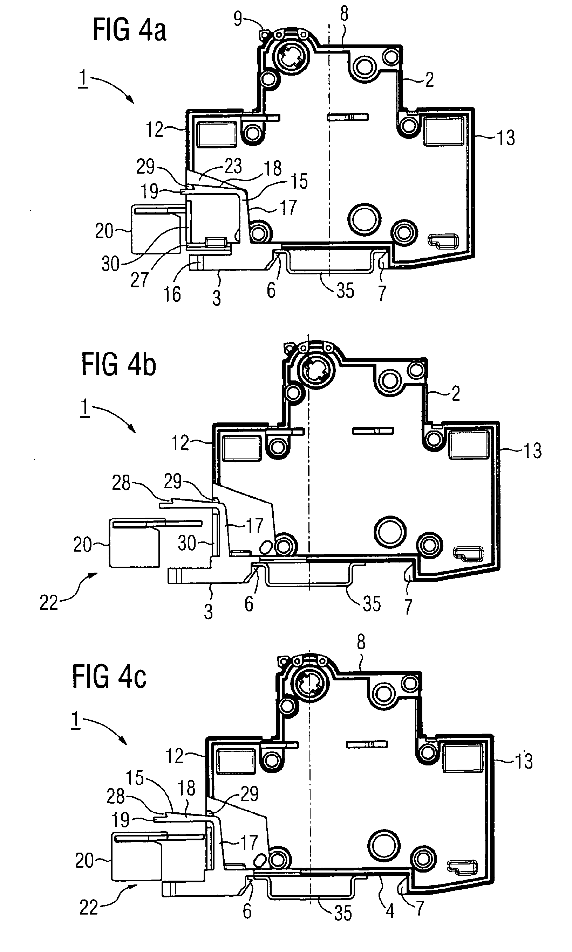

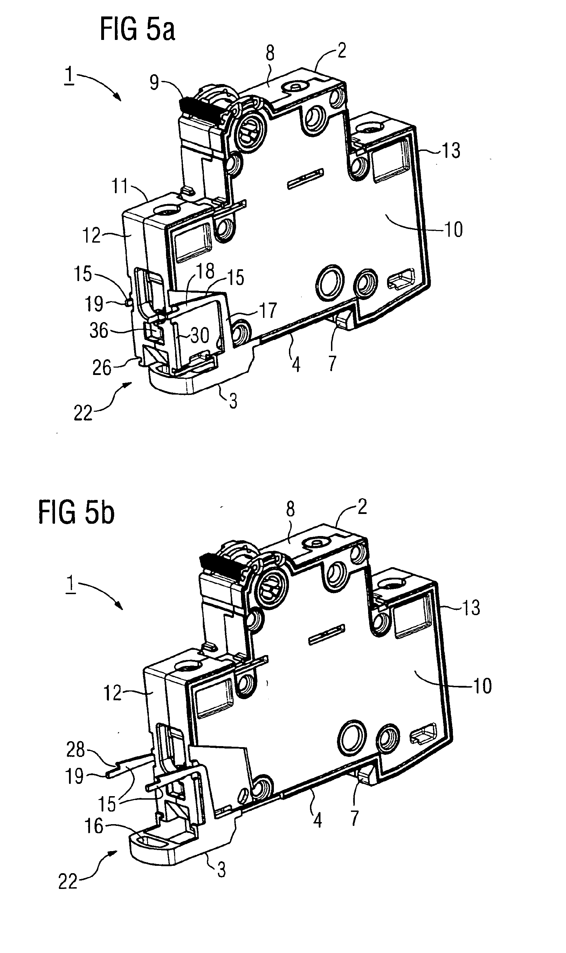

Die FIG 4a,4b,4c und 5a,5b zeigen ein Installationsgerät 1 mit dem in FIG 3a dargestellten doppelarmigen Schlitten 22. Die FIG 4a,4b,4c verdeutlichen insbesondere das Zusammenwirken des Installationsgerätes 1 mit einer Tragschiene oder Hutschiene 35 sowie einer Stromschiene 20. In der Darstellung nach FIG 4a ist das Installationsgerät 1 an die Stromschiene 20 angeschlossen und mit Hilfe der verschiebbaren Rastnase 6 sowie der starren Haltenase 7 auf der Hutschiene 35 fixiert. Aus FIG 4a ist weiterhin gut ersichtlich, dass das Betätigungsende 19 des Haltearms 15 über die Klemmenfläche 12 hinausragt, so dass ein einfaches Lösen des zweiten Schenkels 18 vom Rastvorsprung 29 möglich ist. Die Verbindung zwischen der Ausnehmung 28 auf dem zweiten Schenkel 18 und dem am als Rastvorrichtung dienenden Rastvorsprung 29 ist dabei mit einer Hinterschneidung in der Art eines Widerhakens ausgebildet, so dass ein unbeabsichtigtes Lösen des Installationsgerätes 1 von der Hutschiene 35 ausgeschlossen ist.

Beim Abnehmen des Installationsgerätes 1 von der Hutschiene 35 bleibt die absolute Position der Stromschiene 20 unverändert. Nach dem Lösen des Haltearms 15 vom Rastvorsprung 29 wird zunächst das Installationsgerät 1 auf der Hutschiene 35 parallel zur Befestigungsebene E von der Stromschiene 20 weggezogen, bis der erste Schenkel 17 am Gehäusesteg 30 anliegt (FIG 4b). Anschließend wird das Installationsgerät 1 geringfügig zurückgeschoben, bis die Rastnase 6 aus der Hutschiene 35 ausrastet und kann dann von der Hutschiene 35 abgenommen werden (FIG 4c). Das Aufsetzen des Installationsgerätes 1 auf die Hutschiene 35 geschieht in umgekehrter Reihenfolge.

Ist das Installationsgerät 1 ohne Stromschiene an der Hutschiene 35 befestigt, so ist es nicht erforderlich, den Haltearm 15 vom Rastvorsprung 29 zu lösen, um das Installationsgerät 1 von der Hutschiene 35 abzunehmen. In diesem Fall ist eine ausreichende Nachgiebigkeit des Haltearms 15 und/oder der in den Schieber 3 integrierten, in der Darstellung nicht sichtbaren Feder 14 (FIG 1) gegeben. Auch beim Aufsetzen des Installationsgerätes 1 auf die Hutschiene 35 kann in diesem Fall der Schlitten 22 am Gehäuse 2 eingerastet bleiben.

Die FIG 5a,5b zeigen das Installationsgerät 1 entsprechend den Darstellungen nach FIG 4a bzw. 4b und 4c. An der Klemmenfläche 12 ist eine Anschlussöffnung 36 erkennbar, die dem Anschluss der Stromschiene 20 oder einer beliebigen elektrischen Leitung an das Installationsgerät 1 dient. Unabhängig von der Belegung der Anschlussöffnung 36 sind die Haltearme 15 des Schlittens 22 zugänglich, so dass in jedem Fall der Schieber 3 an der Hutschiene 35 fixierbar sowie von dieser lösbar ist.

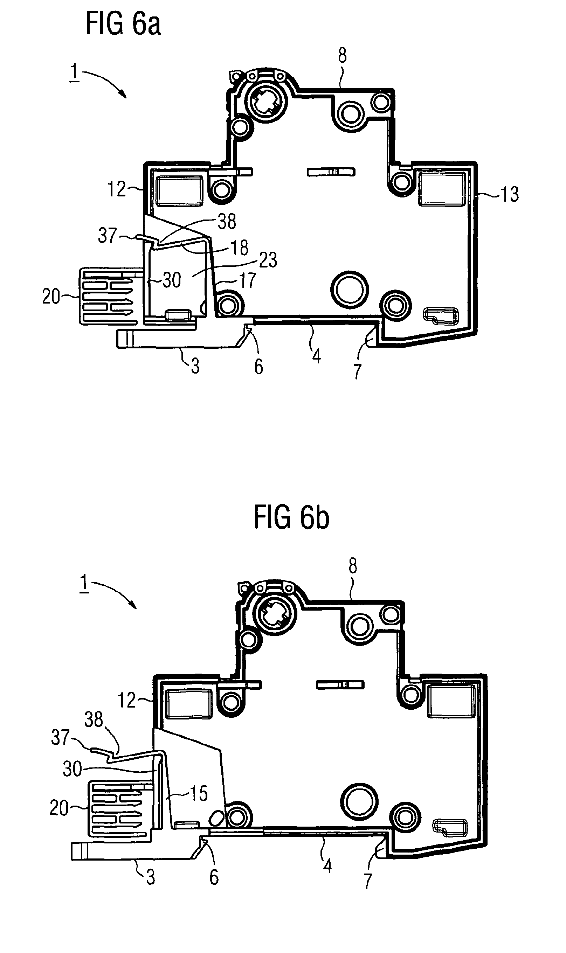

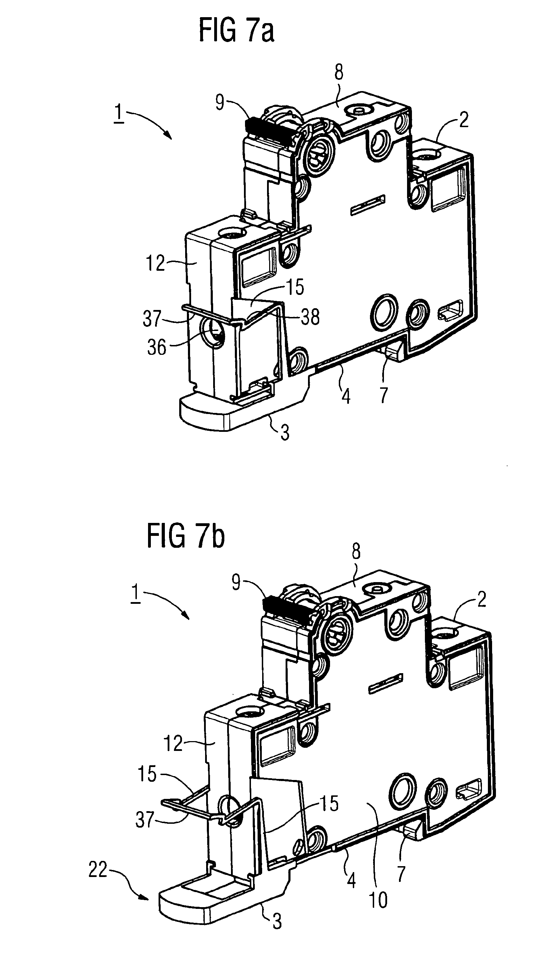

Die FIG 6a,6b und 7a,7b zeigen ein besonders bevorzugtes Ausführungsbeispiel eines Installationsgerätes 1 mit einem Schieber 3 zur Herstellung einer Rastverbindung mit einer hier nicht dargestellten Hutschiene. Die an den Schieber 3 angeformten Haltearme 15 sind an deren Betätigungsenden 19 durch einen Haltebügel 37 verbunden. Der Haltebügel 37 liegt bei eingerastetem Schlitten 22 (FIG 6a,7a) an der Klemmenfläche 12 an, wobei sich die Anschlussöffnung 36 zwischen dem Haltebügel 37 und der Befestigungsebene E befindet. Zum Lösen der Haltearme 15 vom Gehäuse 2 ist in diesem Fall der Haltebügel 37 nach oben, d.h. von der Befestigungsebene E weg zu ziehen. Zur Verrastung der Haltearme 15 am Gehäuse 2 weisen die zweiten Schenkel 18 der Haltearme 15 jeweils einen Doppelknick 38 auf, welcher eine Fixierung am als Rastvorrichtung dienenden Gehäusesteg 30 ermöglicht. Der Gehäusesteg 30 ist dabei in dessen oberem, d.h. der Befestigungsebene E abgewandten Bereich, geringfügig derart verstärkt, dass der zweite Schenkel 18 im Bereich dessen Doppelknicks 38 an einem leicht schräg gestellten Oberflächenbereich des Gehäusestegs 30 anliegt. Die Schrägstellung ist dabei entgegengesetzt zu jener Schrägstellung, welche beim Ausführungsbeispiel nach FIG 4a,4b,4c bei der Rastverbindung zwischen der Ausnehmung 28 und dem Rastvorsprung 29 vorliegt, um in analoger Weise ein unbeabsichtigtes Aufheben der Blockierung des Schiebers 3 zu verhindern. Der die gesamte Breite der Klemmenfläche 12 einnehmende Haltebügel 37 ermöglicht jedoch eine sehr einfache manuelle Aufhebung der Fixierung des Schiebers 3 am Gehäuse 2 selbst bei unmittelbar oberhalb der Befestigungsebene E installierter Stromschiene 20.

## Patentansprüche

1. Einrichtung zur Befestigung eines Installationsgerätes (1) auf einer Tragschiene (35), mit einem senkrecht zum Verlauf der Tragschiene (35) verschieblichen, mittels Federkraft in Richtung der Tragschiene (35) gedrückten und in seiner Befestigungsstellung einen Schenkel der Tragschiene (35) mit einer Rastnase(6) untergreifenden Schieber (3), welcher an einer in einer Befestigungsebene (E) liegenden Befestigungsseite (4) des Gehäuses (2) angeordnet ist, welche einer Betätigungsseite (8) des Gehäuses (2) gegenüberliegt, wobei zwischen der Betätigungsseite (8) und der Befestigungsseite (4) zwei Gehäuseseitenflächen (10,11) angeordnet sind, deren Flächennormalen parallel zur Tragschiene (35) verlaufen und wobei senkrecht zu den Gehäuseseitenflächen (10,11) zwei Klemmenflächen (12,13) des Gehäuses (2) angeordnet sind, **gekennzeichnet durch** einen zumindest geringfügig relativ zum Gehäuse (2) beweglichen gehäusefremden Haltearm (15) zur Fixierung des Schiebers (3) am Gehäuse (2).

2. Einrichtung nach Anspruch 1, **dadurch gekennzeichnet, dass** der Schieber (3) in Führungsbahnen (26,27) des Gehäuses (2) des Installationsgerätes (1) geführt ist.

3. Einrichtung nach Anspruch 1 oder 2, **dadurch gekennzeichnet, dass** der Schieber (3) eine rahmenartige Grundgestalt aufweist.

4. Einrichtung nach Anspruch 3, **dadurch gekennzeichnet, dass** innerhalb des rahmenartigen Schiebers (3) eine die Rastnase (6) in Befestigungsstellung an den Schenkel der Tragschiene (35) drückende Feder (14) angeordnet ist.

5. Einrichtung nach einem der Ansprüche 1 bis 4, **dadurch gekennzeichnet, dass** der Haltearm (15) zumindest teilweise relativ zum Schieber (3) beweglich ist.

6. Einrichtung nach Anspruch 5, **dadurch gekennzeichnet, dass** der Haltearm (15) vom Schieber (3) trennbar ist.

7. Einrichtung nach Anspruch 6, **dadurch gekennzeichnet, dass** der Haltearm (15) senkrecht zur Befestigungsebene (E) verschiebbar ist.

8. Einrichtung nach Anspruch 6, **dadurch gekennzeichnet, dass** der Haltearm (15) schwenkbar am Gehäuse (2) gelagert ist.

9. Einrichtung nach einem der Ansprüche 1 bis 5, **dadurch gekennzeichnet, dass** der Haltearm (15) einstückig mit dem Schieber (3) ausgebildet ist.

10. Einrichtung nach Anspruch 9, **dadurch gekennzeichnet, dass** der Haltearm (15) elastisch ausgebildet ist.

11. Einrichtung nach Anspruch 9 oder 10, **dadurch gekennzeichnet, dass** der Haltearm (15) an einer Gehäuseseitenfläche (10,11) anliegt.

12. Einrichtung nach einem der Ansprüche 9 bis 11, **gekennzeichnet durch** eine Gehäusevertiefung (23) an der Gehäuseseitenfläche (10,11) zur Aufnahme des Haltearms (15).

13. Einrichtung nach einem der Ansprüche 9 bis 12, **dadurch gekennzeichnet, dass** der Haltearm (15) eine abgewinkelte Form aufweist mit einem etwa senkrecht zur Befestigungsebene (E) angeordneten ersten Schenkel (17) und einem an diesen anschließenden, etwa parallel zur Befestigungsebene (E) verlaufenden zweiten Schenkel (18).

14. Einrichtung nach einem der Ansprüche 9 bis 13, **dadurch gekennzeichnet, dass** der Haltearm (15) in eine an einer Wandfläche (10,11,12,13) des Gehäuses (2) angeordnete Rastvorrichtung (29,30) einrastbar ist.

15. Einrichtung nach einem der Ansprüche 9 bis 14, **dadurch gekennzeichnet, dass** jeweils ein Haltearm (15) an jeder Gehäuseseitenfläche (10,11) vorgesehen ist.

16. Einrichtung nach Anspruch 15, **gekennzeichnet durch** einen die Haltearme (15) verbindenden, zumindest geringfügig beweglichen Haltebügel (37).

17. Einrichtung nach Anspruch 16, **dadurch gekennzeichnet, dass** der Haltebügel (37) an der Klemmenfläche (12,13) des Gehäuses (2) angeordnet ist.

18. Einrichtung nach Anspruch 17, **dadurch gekennzeichnet, dass** zwischen dem Haltebügel (37) und der Befestigungsebene (E) eine Anschlussöffnung (36) im Gehäuse (2) angeordnet ist.
